(19) 

Europäisches
Patentamt
European
Patent Office
Office européen
des brevets

(11) **EP 2 843 983 A1**

(12) **EUROPEAN PATENT APPLICATION**
published in accordance with Art. 153(4) EPC

(43) Date of publication:
**04.03.2015 Bulletin 2015/10**

(21) Application number: **13782031.2**

(22) Date of filing: **12.04.2013**

(51) Int Cl.:
**H04W 16/28** $^{(2009.01)}$     **H04W 72/04** $^{(2009.01)}$

(86) International application number:
**PCT/JP2013/061069**

(87) International publication number:
**WO 2013/161588 (31.10.2013 Gazette 2013/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.04.2012 JP 2012103511**

(71) Applicant: **NTT DOCOMO, Inc.**
**Chiyoda-ku**
**Tokyo 100-6150 (JP)**

(72) Inventors:
• **NAGATA, Satoshi**
**Tokyo 100-6150 (JP)**

• **KISHIYAMA, Yoshihisa**
**Tokyo 100-6150 (JP)**
• **XI, Wei**
**Beijing 100190 (CN)**
• **YUN, Xiang**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **WIRELESS COMMUNICATIONS SYSTEM, BASE STATION DEVICE, USER TERMINAL, AND WIRELESS COMMUNICATIONS METHOD**

(57)     Provided are a radio communication system, a base station apparatus, a user terminal and a radio communication method all capable of determining channel quality information in consideration of interference from a plurality of transmission points or the like appropriately. The radio communication system is a system having a plurality of base station apparatuses each configured to transmit desired signal measurement reference signals and interference measurement reference signals for measuring a channel state and a user terminal configured to communicate with the base station apparatuses. Each of the base station apparatuses has a determining section configured to determine resources to allocate the desired signal measurement reference signals and the interference measurement reference signals; and a phase control section configured to perform phase rotation on symbols of the interference measurement reference signals. The determining section controls the interference measurement reference signals to be allocated to same resources as interference measurement reference signals transmitted from another base station apparatus, and the phase control section controls the symbols of the interference measurement reference signals to have different phase rotation amounts from phase rotation amounts of the other base station apparatus.

EP 2 843 983 A1

**FIG.4A**

SUBFRAME TRANSMITTED
FROM TP#1
(COMP NOT-APPLIED)

SUBFRAME TRANSMITTED
FROM TP#2
(COMP NOT-APPLIED)

**FIG.4B**

**Description**

Technical Field

The present invention relates to a radio communication system, a base station apparatus, a user terminal and a radio communication method in a next-generation mobile communication system.

Background Art

In a UMTS (Universal Mobile Telecommunications System) network, for the purposes of improving spectral efficiency and improving data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing data rates, providing low delay and so on, long-term evolution (LTE) has been under study (see Non Patent Literature 1).

In a third-generation system (W-CDMA), it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band which ranges from 1.4 MHz to 20 MHz. Furthermore, in the UMTS network, for the purpose of achieving further broadbandization and data rates and so on, a successor system to LTE has been under study (such a system is called, for example, LTE Advanced or LTE Enhancement, and hereinafter, this system is referred to as LTE-A).

In the downlink of the LTE system (for example, Rel. 8 LTE), a CRS (Cell-specific Reference Signal) is defined as associated with a cell ID. This CRS is used for demodulation of user data as well as measurement of channel quality (CQI: Channel Quality Indicator) on the downlink for scheduling and adaptive control. On the other hand, in the downlink of the successor system to LTE (for example, Rel. 10 LTE), a CSI-RS (Channel State Information-Reference Signal) has been under study for measuring CSI (Channel State Information).

Citation List

Non Patent Literature

Non Patent Literature 1: 3GPP, TR25.912 (V7.1.0), "Feasibility study for Evolved UTRA and UTRAN", Sept. 2006

Summary of Invention

Technical Problem

In the meantime, as one of promising techniques for improving the system performance more than that of the LTE system, there is inter-cell orthogonalization. For example, in the LTE-A system, intra-cell orthogonalization is realized by orthogonal multi access in both of uplink and downlink. That is, in the downlink, orthogonalization is performed between user terminals (UE: User Equipment) in a frequency domain. On the other hand, interference randomization by universal frequency reuse is fundamentally performed between cells, like in W-CDMA.

Then, in 3GPP (3rd Generation Partnership Project), as a technique for realizing inter-cell orthogonalization, Coordinated Multi-Point transmission/reception (CoMP) has been under study. In this CoMP transmission/reception, a plurality of cells coordinate to perform processing of transmission/reception signals for one or more user terminals UE. By application of such a CoMP transmission/reception technique, improvement of throughput performance can be expected particularly for a user terminal located at a cell edge.

In this way, in the LTE-A system, in addition to the transmission form of transmitting from one transmission point to a user terminal, there is another transmission form of transmitting from a plurality of transmission points to a user terminal. Therefore, it is important for the user terminal to determine channel quality information in consideration of interference between the plural transmission points or the like.

The present invention was carried out in view of the foregoing and has an object to provide a radio communication system, a base station apparatus, a user terminal and a radio communication method that are capable of determining channel quality information appropriately considering interference from a plurality of transmission points and so on.

Solution to Problem

The present invention provides a radio communication system comprising a plurality of base station apparatuses each configured to transmit desired signal measurement reference signals and interference measurement reference signals for measuring a channel state; and a user terminal configured to communicate with the base station apparatuses, each of the base station apparatuses comprising: a determining section configured to determine resources to allocate the desired signal measurement reference signals and the interference measurement reference signals; and a phase control section configured to perform phase rotation on symbols of the interference measurement reference signals, wherein the determining section controls the interference measurement reference signals to be allocated to same resources as interference measurement reference signals transmitted from another base station apparatus, and the phase control section controls the symbols of the interference measurement reference signals to have different phase rotation amounts from phase rotation amounts of the other base station apparatus.

Advantageous Effects of Invention

According to the present invention, it is possible to determine channel quality information appropriately considering interference from a plurality of transmission points and so on. With this structure, it is possible to realize a radio communication system with improved throughputs and high efficiency.

Brief Description of Drawings

Fig. 1 is a diagram illustrating an example of a CSI-RS pattern including interference measurement CSI-RSs;
Fig. 2 provides diagrams illustrating an example of CSI-RS patterns including interference measurement CSI-RSs transmitted from a plurality of transmission points;
Fig. 3 provides diagrams illustrating an example of CSI-RS patterns including interference measurement CSI-RSs transmitted from a plurality of transmission points;
Fig. 4 provides diagrams illustrating an example of CSI-RS patterns including interference measurement CSI-RSs transmitted from a plurality of transmission points;
Fig. 5 provides diagrams each illustrating interference measurement CSI-RS symbols at respective transmission points in an I-Q plane;
Fig. 6 illustrates a table of phase rotation amounts (θ) and bit values of interference measurement CSI-RS symbols;
Fig. 7 provides diagrams each illustrating phase rotation amounts at respective transmission points when CoMP is not applied (single cell transmission is applied);
Fig. 8 provides diagrams each illustrating phase rotation amounts at respective transmission points when CoMP is applied;
Fig. 9 provides diagrams each illustrating an example of a CSI-RS pattern including interference measurement CSI-RSs;
Fig. 10 is an explanatory view of a system configuration of a radio communication system;
Fig. 11 is an explanatory view of an overall configuration of a base station apparatus;
Fig. 12 is an explanatory view of an overall configuration of a user terminal;
Fig. 13 is a functional block diagram of the base station apparatus; and
Fig. 14 is a functional block diagram of the user terminal.

Description of Embodiments

First explanation is made about a CSI-RS which is one of reference signals adopted in a successor system to LTE (for example, Rel. 10 LTE).
CSI-RS is a reference signal that is used for measurement of CSI such as RI (Rank Indicator), PMI (Precoding Matrix Indicator), CQI (Channel Quality Indicator) as channel state and so on. The CSI-RS is allocated at predetermined intervals, for example, at 10-subframe intervals and is different from CRS that is allocated to each subframe. Besides, the CSI-RS is identified by parameters such as a position, a sequence and transmission power. The position of a CSI-RS includes a subframe offset, a cycle and subcarrier-symbol offset (index).
Note that the CSI-RS is defined as including a non-zero power CSI-RS and a zero power CSI-RS. The non-zero power CSI-RS is a CSI-RS which is allocated to a resource with transmission power and the zero power CSI-RS is a CSI-RS which is allocated to a resource with no transmission power (CSI-RS is muted).
CSI-RSs are allocated in such a manner as not to overlap control signals such as PDCCH (Physical Downlink Control Channel), user data such as PDSCH (Physical Downlink Shared Channel) and other reference signals such as CRS (Cell-specific Reference Signal) and DM-RS (Demodulation-Reference Signal) in a subframe defined in LTE. One subframe is formed with 12 consecutive subcarriers in the frequency direction and 14 consecutive symbols in the time axis direction (one resource block (RB) pair). In view of PAPR suppression, CSI-RSs are allocatable to each set of two resource elements (RE) adjacent in the time axis direction.

In estimating interference with use of CSI-RSs, it is possible to obtain interference power from residuals of two CSI-RSs adjacent in the time axis direction. As the CSI-RSs are mapped in pair to two resources (REs) adjacent in the time axis direction, the channel states of the respective CSI-RSs become almost equal at the respective mapping positions, and when estimating interference power from the residuals of two CSI-RSs, the interference can be estimated with high accuracy.

Further, in the LTE-A system, there is a transmission form of transmitting from a plurality of transmission points to a user terminal. Therefore, high accuracy of interference measurement is required for calculation of a CQI based on a CSI-RS.

As the transmission form of transmitting from a plurality of transmission points, there is CoMP transmission. Downlink CoMP transmission includes Coordinated Scheduling/Coordinated Beamforming and Joint processing. Coordinated Scheduling/Coordinated Beamforming is a method of transmitting a shared data channel to a user terminal UE from one cell only, in which radio resources are allocated in a frequency/spatial domains in consideration of interference from other cells and interference to other cells. On the other hand, Joint processing is a method of transmitting a shared data channel simultaneously from a plurality of cells by using precoding, including Joint transmission of transmitting a shared data channel to one user terminal UE from a plurality of cells and Dynamic Point Selection (DPS) of instantaneously selecting one cell to transmit a shared data channel. Besides, there is also a transmission form called Dynamic Point Blanking (DPB) of stopping data transmission to an interfering transmission point in a certain region.

Thus, it is effective to perform interference measurement using CSI-RSs from a plurality of transmission points in CoMP transmission or the like, however, CSI-RSs specified in LTE (Rel. 10 LTE) are provided at a low density in a pair of resource blocks and therefore, it is difficult to measure interference from another transmission point (another cell) with high accuracy.

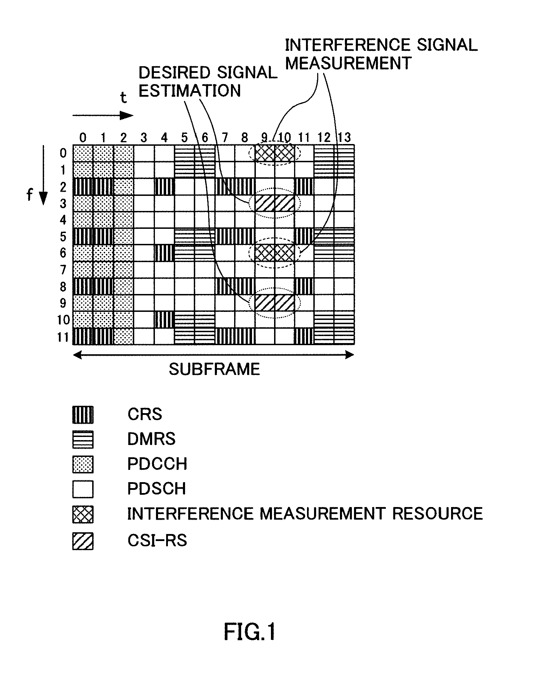

Then, the inventors have proposed to add CSI-RSs used in interference measurement (hereinafter referred to as "interference measurement CSI-RS") in addition to CSI-RSs used in desired signal measurement (hereinafter referred to as "desired signal measurement CSI-RS"), as illustrated in Fig. 1, and control resources of interference measurement CSI-RSs between a plurality of transmission points. Since both of the desired signal measurement CSI-RSs (existing CSI-RSs) and the interference measurement CSI-RSs can be used to measure interference, it is possible to improve interference measurement accuracy.

Here, description is made about one example of the interference signal estimation method using interference measurement CSI-RSs. In the following description, a system configuration where two base station apparatuses become transmission points (TP#1, TP#2) is taken as example, however, the number of transmission points (TP) is not limited to two.

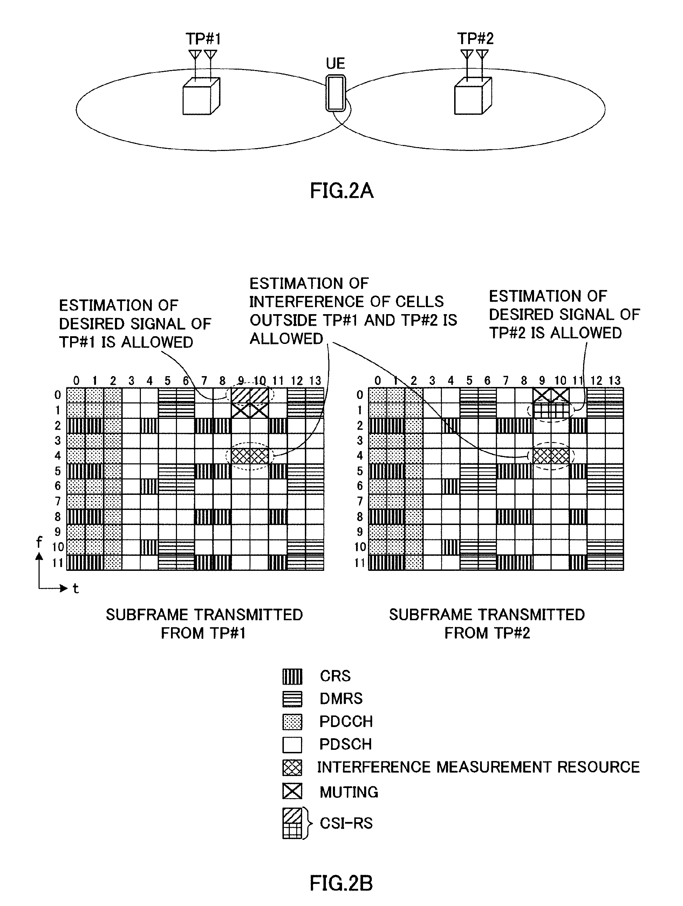

Fig. 2A illustrates the case where transmission is performed from the transmission points TP#1 and TP#2 to the user terminal UE. Fig. 2B illustrates an example of the CSI-RS pattern where interference measurement CSI-RSs are arranged. In Fig. 2B, the left subframe is a subframe transmitted from TP#1 and the right subframe is a subframe transmitted from TP#2.

In Fig. 2B, the interference measurement CSI-RSs are allocated to the same resources between the plural transmission points (TP#1, TP#2). Specifically, in the subframe of each of TP#1 and TP#2, the interference measurement CSI-RSs are allocated to REs of number "4" in the frequency axis direction and of numbers "9" and "10" in the time axis direction. As these interference measurement CSI-RSs are used, it is possible to estimate interference signals of cells outside TP#1 and TP#2.

Besides, as illustrated in Fig. 2, when desired signal measurement CSI-RSs (existing CSI-RSs) are arranged in REs of number "0" in the frequency axis direction and of numbers "9" and "10" in the time axis direction in the subframes of TP#1, it becomes possible to estimate a desired signal of TP#1 in each of these REs. Further, as illustrated in Fig. 2, when desired signal measurement CSI-RSs (existing CSI-RSs) are arranged in REs of number "1" in the frequency axis direction and of numbers "9" and "10" in the time axis direction in the subframes of TP#2, it becomes possible to estimate a desired signal of TP#2 in each of these REs.

In this case, information about the method for estimating a desired signal and the method for estimating an interference signal is signaled from the base station apparatuses to the user terminal. That is, information about REs for use in estimation of desired signals (SMR: Signal Measurement Resource), information about REs for use in estimation of interference signals (IMR: Interference Measurement Resource) and information of combination of SMR and IMR are signaled from the base station apparatuses to the user terminal. These information pieces may be given from the base station apparatuses to the user terminal by higher layer signaling (for example, RRC signaling) or may be dynamically sent from the base station apparatuses to the user terminal in downlink control information (DCI).

Thus, as the interference measurement CSI-RSs are allocated to the same resources in the plural transmission points (TP#1 and TP#2), it is possible to estimate interference signals of cells outside TP#1 and TP#2. Further, in this case, as the interference measurement CSI-RSs are transmitted by one antenna port at each transmission point, it is possible to reduce signaling overhead.

On the other hand, the present inventors have found that if interference measurement CSI-RSs are allocated to the same resources in different transmission points, the accuracy of measurement of interference power may be reduced at each transmission point in some transmission forms. As an example, if the interference measurement CSI-RSs are allocated to the same resources between the different transmission points when CoMP is not applied (single cell transmission), interference power may be sometimes difficult to measure accurately. The following description is, then, made about the method for calculating interference power in accordance with the transmission form.

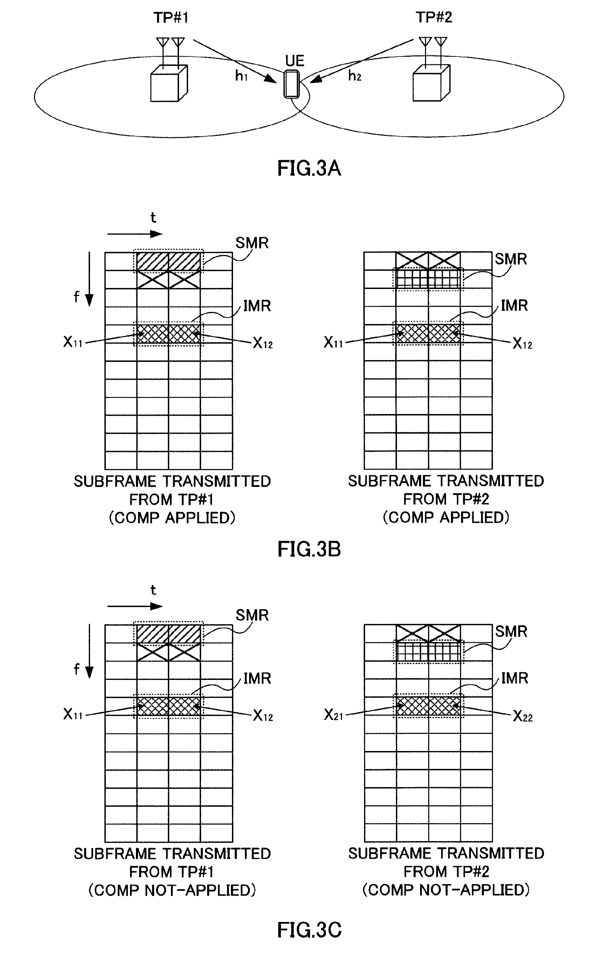

Fig. 3 shows predetermined symbols (for example, symbols of numbers "8" to "11") in Fig. 2 extracted by one resource block, showing one example of a CSI-RS pattern in which interference measurement CSI-RSs are arranged at the same resources between a plurality of transmission points. For convenience of explanation, other signals (e.g., DM-RS, PDSCH) are omitted in the following description.

Further, in Figs. 3B and 3C, the left subframe is a subframe transmitted from TP#1 and the right subframe is a subframe transmitted from TP#2. Further, Fig. 3B illustrates one example of CSI-RS pattern when CoMP is applied and Fig. 3C illustrates of one example of CSI-RS pattern when CoMP is not applied (single cell transmission).

In a user terminal, a reception signal "$y_i$" in a predetermined (for example, the jth) RE (IMR) for use for interference signal measurement can be expressed $y_i = h_i X_{ij} + n_j$ in which the CSI-RS symbol of the jth RE (IMR) transmitted from TP#i is "$X_{ij}$", the channel fading from the first antenna of TP#i to the user terminal is "$h_i$", the noise (AWGN) of the jth RE (IMR) in the user terminal is "$n_j$".

When CoMP is applied to TP#1 and TP#2 (see Fig. 3B), the reception signals ($y_1$, $y_2$) in two REs (IMRs) adjacent in the time axis direction can be expressed by the following expression (1). In the following description, it is assumed that two REs (IMRs) for measurement of interference signals adjacent in the time axis direction in subframes transmitted from TP#1 (connecting cell) and TP#2 (coordinated cell) are the first and second IMRs sequentially in the time axis direction.

[EXPRESSION 1]

$$\begin{cases} y_1 = h_1 X_{11} + h_2 X_{11} + n_1; \\ y_2 = h_1 X_{12} + h_2 X_{12} + n_2, \end{cases}$$

In the expression (1), $X_{11}$ and $X_{12}$ are interference measurement CSI-RS symbols allocated to two interference measurement REs (IMRs) adjacent in the time axis direction in each of the subframes transmitted from TP#1 and TP#2, respectively (see Fig. 3B). Further, $h_1$ denotes channel fading from TP#1 to UE, $h_2$ denotes channel fading from TP#2 to UE and $n_1$ and $n_2$ denote noises of two interference measurement REs (IMRs) adjacent in the time axis direction.

Further, interference power ($P_{12}$) of other than TP#1 and TP#2 (outside of TP#1 and TP#2) can be expressed by the following expression (2).

[EXPRESSION 2]

$$P_{12} = \frac{1}{2} | y_1 X_{11}^* - y_2 X_{12}^* |^2 = \frac{1}{2} | n_1 X_{11}^* - n_2 X_{12}^* |^2$$

In the expression (2), $X_{11}^*$ and $X_{12}^*$ are conjugates of $X_{11}$ and $X_{12}$, respectively. By multiplying $y_1$ by $X_{11}^*$, it is possible to remove influence of $X_{11}$ from $y_1$ and measure interference of other than its own cell appropriately

Thus, as the interference measurement CSI-RSs are arranged in the same resources in subframes transmitted from TP#1 and TP#2, it is possible to allow the user terminal to calculate interference power other than TP#1 and TP#2 accurately.

On the other hand, when CoMP transmission is not applied to TP#1 and TP#2 (single cell transmission) (see Fig. 3C), reception signals ($y_1$, $y_2$) of two REs (IMRs) adjacent in the time axis direction can be expressed by the following expression (3).

[EXPRESSION 3]

$$\begin{cases} y_1 = h_1 X_{11} + h_2 X_{21} + n_1; \\ y_2 = h_1 X_{12} + h_2 X_{22} + n_2, \end{cases}$$

In the expression (3), $X_{11}$ and $X_{12}$ are interference measurement CSI-RS symbols allocated to two interference measurement REs (IMRs) adjacent in the time axis direction in subframes transmitted from TP#1. $X_{21}$ and $X_{22}$ are interference measurement CSI-RS symbols allocated to two interference measurement REs (IMRs) adjacent in the time axis direction in subframes transmitted from TP#2. In other words, $X_{11}$ and $X_{21}$ are allocated to the same REs and $X_{12}$ and $X_{22}$ are allocated to the same REs. Further, $h_1$ denotes channel fading from TP#1 to the user terminal and $h_2$ denotes channel fading from TP#2 to the user terminal. Further, n1, n2 denote noises in two REs (IMRs) adjacent in the time axis direction.

Further, interference power (interference power $P_1$ in TP#1) of other than TP#1 (outside TP#1) can be expressed by the following expression (4).

[EXPRESSION 4]

$$P_1 = \frac{1}{2} \mid y_1 X_{11}^* - y_2 X_{12}^* \mid^2$$

$$= \frac{1}{2} \mid (X_{21} X_{11}^* - X_{22} X_{12}^*) \cdot h_2 + n_1 X_{11}^* - n_2 X_{12}^* \mid^2$$

In the expression (4), the interference measurement CSI-RS symbol ($X_{ij}$) is QPSK symbol, when a phase difference ($\alpha_1$) between $X_{21}$ and $X_{11}$ is equal to a phase difference ($\alpha_2$) between $X_{22}$ and $X_{12}$ ($\alpha_1 = \alpha_2$), $X_{21} X_{11}^* - X_{22} X_{12}^* = 0$. In this case, the interference power ($P_1$) at TP#1 is estimated to be lower (underestimated), and the accuracy of measurement of interference power at the user terminal may be reduced.

As a result of this, the accuracy of measurement of CQIs calculated at the user terminal may be also reduced. Particularly, when the interference measurement CSI-RSs are allocated to the two REs adjacent in the time axis direction, channel fluctuation is small, and therefore, the phase difference between $X_{21}$ and $X_{11}$ and the phase difference between $X_{22}$ and $X_{12}$ may be easily equal to each other, and the accuracy of measurement of interference at the single cell transmission may be highly possibly reduced.

Then, the present inventors have noted a difference ($\alpha_{11} - \alpha_2$) between the phase difference ($\alpha_1$) between $X_2$, and $X_{11}$ and the phase difference ($\alpha_2$) between $X_{22}$ and $X_{12}$, and found that the accuracy of measurement can be improved by controlling the phase difference between CSI-RS symbols at different transmission points even when the interference measurement CSI-RSs are allocated to the same resources between different transmission points. Specifically, predetermined interference measurement CSI-RS symbols to allocate to subframes of respective transmission points are controlled to have different phase rotation amounts (also called "phase shift amounts" or "phase rotation angles").

The following description is made about details of present embodiments, with reference to the drawings.

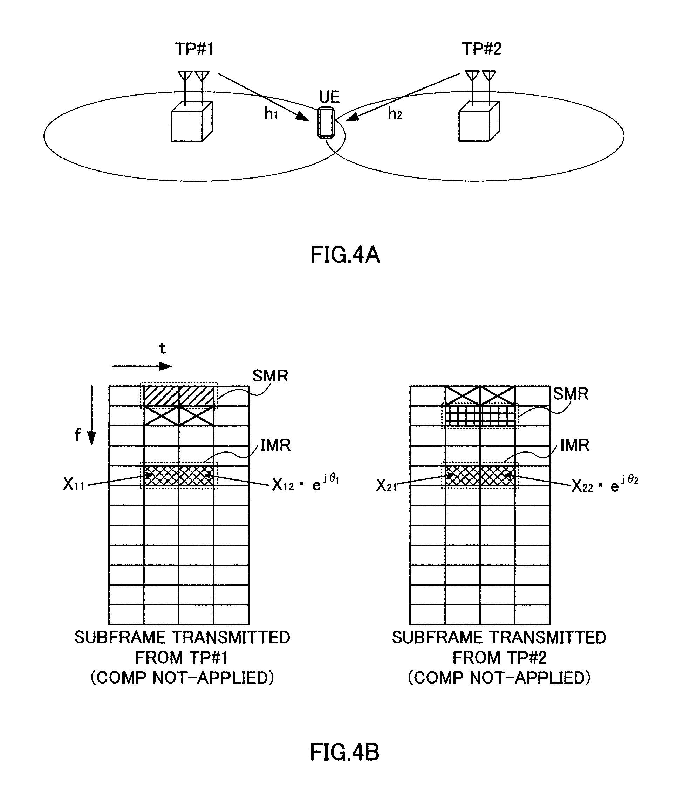

Fig. 4 is a view of predetermined symbols (for example, symbols of numbers "8" to "11") extracted by one resource block from Fig. 2, illustrating an example of the CSI-RS pattern where interference measurement CSI-RSs are allocated to the same resources at the plural transmission points. In Fig. 4B, the left subframe is a subframe transmitted from TP#1 and the right subframe is a subframe transmitted from TP#2.

In this embodiment, the interference measurement CSI-RS symbols at different transmission points (TP#1, TP#2) are given mutually different phase rotation amounts (phase shift amounts, phase rotation angles). For example, the base station apparatus of TP#1 controls interference measurement CSI-RS symbols by a different phase rotation amount from that of TP#2.

Specifically, the base station apparatus of TP#1 allocates the interference measurement CSI-RSs to two resources (IMRs) adjacent in the time axis direction and provides an interference measurement CSI-RS symbol allocated to one of the two resources with a different phase rotation amount from that of the base station apparatus of TP#2. For example, as illustrated in Fig. 4B, out of the two interference measurement CSI-RS symbols consecutive in the time axis direction in the subframes transmitted from TP#1, the last interference measurement CSI-RS symbol ($X_{12}$) is phase-rotated by $\theta_1$. Besides, out of the two interference measurement CSI-RS symbols consecutive in the time axis direction in the subframes transmitted from TP#2, the last interference measurement CSI-RS symbol ($X_{22}$) is phase-rotated by $\theta_2$.

In this case, the reception signals ($y_1$, $y_2$) of two REs (IMRs) adjacent in the time axis direction for use in interference signal measurement in the user terminal can be expressed by the following expression (5).

[EXPRESSION 5]

$$\begin{cases} y_1 = h_1 X_{11} + h_2 X_{21} + n_1; \\ y_2 = h_1 X_{12} \cdot e^{j\,\theta_1} + h_2 X_{22} \cdot e^{j\,\theta_2} + n_2, \end{cases}$$

In addition, the interference power ($P_1$) of other than TP#1 at TP#1 can be expressed by the following expression (6).

[EXPRESSION 6]

$$P_1 = \frac{1}{2} \mid y_1 X_{11}^* - y_2 X_{12}^* \cdot e^{-j\,\theta_1} \mid^2$$

$$= \frac{1}{2} \mid (X_{21} X_{11}^* - X_{22} X_{12}^* \cdot e^{j(\theta_2 - \theta_1)}) \cdot h_2 + n_1 X_{11}^* - n_2 X_{12}^* \cdot e^{-j\,\theta_1} \mid^2$$

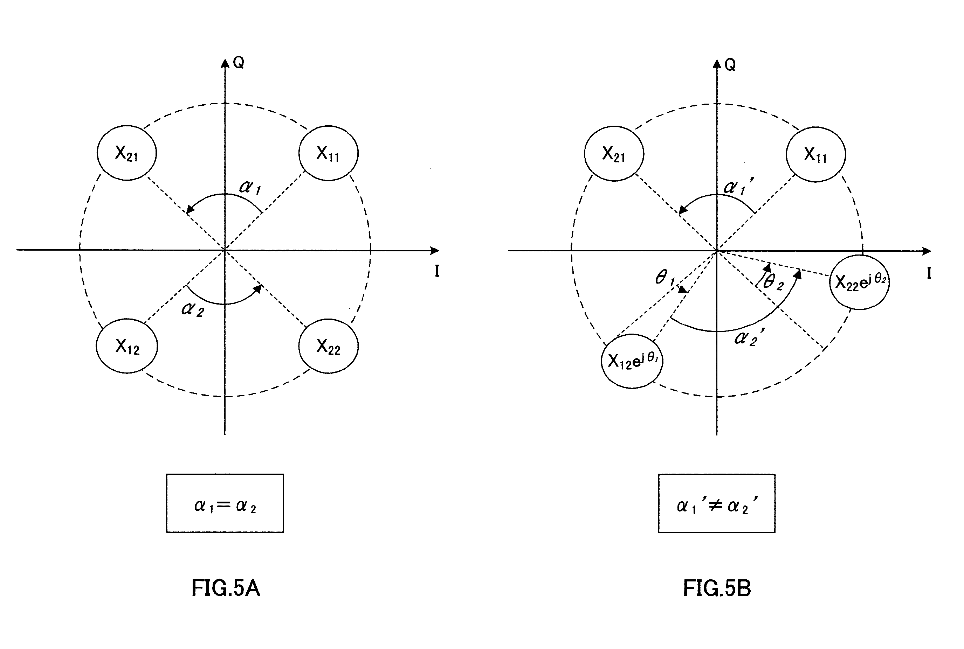

Fig. 5 illustrates an example of the interference measurement CSI-RS symbols ($X_{11}$, $X_{12}$) transmitted from TP#1 and the interference measurement CSI-RS symbols ($X_{21}$, $X_{22}$) transmitted from TP#2 that are each shown in the I-Q plane. Note that Fig. 5A illustrates the case the interference measurement CSI-RS symbols are not subjected to phase rotation control (see Fig. 3C) and Fig. 5B illustrates the case the interference measurement CSI-RS symbols ($X_{12}$, $X_{22}$) transmitted from TP#1 and TP#2 respectively are phase-rotated by $\theta_1$ and $\theta_2$ ($\theta_1 \neq \theta_2$), respectively (see Fig. 4B).

As illustrated in Fig. 5A, when the phase difference ($\alpha_1$) between $X_{21}$ and $X_{11}$ is equal to the phase difference ($\alpha_2$) between $X_{22}$ and $X_{12}$ ($\alpha_1 = \alpha_2$), as described above, the interference power ($P_1$) at TP#1 is underestimated and the accuracy of interference measurement at the user terminal is deteriorated. On the other hand, as described in the present embodiment, as the predetermined interference measurement CSI-RS symbols transmitted from TP#1 and TP#2 (for example, $X_{12}$ and $X_{22}$) are phase-rotated by the mutually different angles ($\theta_1 \neq \theta_2$), even if $\alpha_1 = \alpha_2$ is satisfied, the phase difference ($\alpha_1'$) between $X_{21}$ and $X_{11}$ is differentiated from the phase difference ($\alpha_2'$) between $X_{22}e^{j\theta2}$ and $X_{12}e^{j\theta1}$ ($\alpha_1 \neq \alpha_2'$).

Therefore, in the above-mentioned expression (6), $X_{21} X^*_{11} - X_{22} X^*_{12}e^{j(\theta2-\theta1)} \neq 0$ is satisfied, and it is possible to prevent reduction of the interference measurement accuracy at the user terminal, without underestimating the interference power ($P_1$, $P_2$) at TP#1 and TP#2.

Here, in the above description, it is assumed that the interference measurement CSI-RS symbol ($X_{12}$) transmitted from TP#1 and the interference measurement CSI-RS symbol ($X_{22}$) transmitted from TP#2 are changed in phase rotation amount. However, this is not intended to limit the present embodiment. The phase rotation control may be any control as far as the phase difference between $X_{21}$ and $X_{11}$ is different from the phase difference between $X_{22}$ and $X_{12}$. For example, either of the interference measurement CSI-RS symbol ($X_{12}$) transmitted from TP#1 and the interference measurement CSI-RS symbol ($X_{22}$) transmitted from TP#2 may be changed in phase rotation amount. Besides, it may be also possible to change the phase rotation amount of the other interference measurement CSI-RS symbols ($X_{11}$, $X_{21}$) adjacent in the time axis direction.

In this way, when the REs (IMRs) for estimating interference signals are allocated to the same resources from the different transmission points to perform interference measurement, predetermined interference measurement CSI-RS symbols transmitted from respective transmission points are subjected to phase rotation by mutually difference angles, thereby making it possible to reduce the interference measurement accuracy.

The next description is made about an example of the operation of a base station apparatus when performing phase rotation control on interference measurement CSI-RS symbols. The base station apparatus controls a phase rotation amount of an interference measurement CSI-RS symbol before mapping the interference measurement CSI-RS symbol to a processing resource. For example, as illustrated in the following expression (7), the base station apparatus adds a predetermined phase shift amount ($\theta_i$) to a reference signal sequence to be able to map to complex modulation symbols.

[EXPRESSION 7]

$$\alpha_{k,l}^{(p)} = w_{l''} \cdot r_{l,n_s}(m') \cdot e^{j\theta_i}$$

In the expression (7), $\alpha_{k,l}$ (p) is a code to map to resource grid, $w_l$" is a OCC code of length 2, $r_{l,ns}$ is a reference signal sequence (Gold sequence after QPSK Modulation), and $\theta_i$ is a phase rotation amount (specific to transmission point (TP-specific) in single cell transmission or specific to CoMP set (Measurement set-specific) in CoMP transmission), j is a unit of imaginary number ($j^2$=-1). Here, the phase rotation may be introduced to either of two CSI-RSs and for example, it may be configured that if phase rotation is introduced to the first one, 1" = 0, and if phase rotation is introduced to the second one, 1"=1.

Further, the base station apparatus is able to notify the user terminal of information about phase rotation (phase rotation amount). The user terminal specifies the phase rotation amount of an interference measurement CSI-RS symbol transmitted from each transmission point and thereby, scramble analysis can be performed accurately.

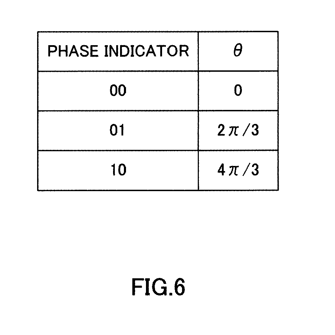

For example, the base station apparatus can notify the user terminal of the phase rotation amount by higher layer signaling (for example, RRC signaling), broadcast signals or the like. In this case, the base station apparatus may adopt a table combining phase rotation amounts ($\theta$) and bit values (see Fig. 6) or the base station apparatus may signal the information of a phase rotation amount. If the base station apparatus and the user terminal have the same table, the user terminal is able to specify the phase rotation amount of an interference measurement CSI-RS symbol transmitted from each transmission point, based on the information given by RRC signaling, broadcast signals or the like.

Note that the table of Fig. 6 illustrates three phase rotation amounts, as an example. However, the table may show any number of phase rotation amounts. Further, when the base station apparatus notifies the user terminal of the phase rotation amount by higher layer signaling (for example, RRC signaling), broadcast signals or the like, the base station apparatus may determine the phase rotation amount at random to notify the user terminal or may notify the user terminal of the phase rotation amount that varies from one base station apparatus to another.

Further, when transmitting a desired signal measurement CSI-RS, the base station apparatus notifies the user terminal of information (CSI-RS-Config) indicating a transmission parameter to specify the CSI-RS (position, sequence, transmission power and the like) by higher layer signaling (RRC signaling). Accordingly, the base station apparatus may be configured to notify the user terminal of a phase rotation amount of the interference measurement CSI-RS with the same timing as the information (CSI-RS-Config) indicating the transmission parameter (by including the phase rotation amount in CSI-RS-Config).

Further, the base station apparatus may be able to associate the phase rotation amount ($\theta$) with information specific to each transmission point (or a group of transmission points) to control the phase rotation amount of the interference measurement CSI-RS symbol. For example, when cell IDs of transmission points (or virtual cell IDs) are different from each other, the phase rotation amount is defined as associated with a cell ID (or virtual cell ID) of each transmission point to control the phase rotation amount. In this case, the base station apparatus is able to control the phase rotation amount of the interference measurement CSI-RS symbol using the expression (for example, the following expression (8)) that associates the phase rotation amount with each cell ID (or virtual cell ID).

Here, the virtual cell ID may be a value generated from a user-specific parameter (for example, user-specific parameter A in the CSI-RS initial pseudo random sequence generation expression (the following expression (9)) given by higher layer signaling (RRC signaling) in the initial pseudo random sequence generation of a reference signal (for example, CSI-RS or DM-RS).

[EXPRESSION 8]

$$\theta_i = \frac{(X_i - 1)2\pi}{N}$$

$X_i$: remainder of division of the cell ID of TP#i (or virtual cell ID) by N
i = 1, 2, 3, ..., N
N: any integer

[EXPRESSION 9]

$$c_{\text{init}} = 2^{10} \cdot \left(7 \cdot \left(n_s + 1\right) + l + 1\right) \cdot \left(2 \cdot A + 1\right) + 2 \cdot A + N_{\text{CP}}$$

$n_s$: slot number in a radio frame
1: OFDM symbol number in a slot

$$N_{\text{CP}} = \begin{cases} 1 & \text{for normal CP} \\ 0 & \text{for extended CP} \end{cases}$$

When the expression (8) is applied, for example, it is assumed N is 3 and cell IDs of TP#1, TP#2 and TP#3 are 1, 2, and 3, respectively. Then, the base station apparatus of cell ID=1 controls the phase rotation amount ($\theta_1$) to be 0, the base station apparatus of cell ID=2 controls the phase rotation angle ($\theta_2$) to be 2n/3 and the base station apparatus of cell ID=3 controls the phase rotation angle ($\theta_3$) to be 4n/3. In this case, the user terminal is able to specify the phase rotation amount of an interference measurement CSI-RS symbol transmitted from each transmission point based on the cell ID. Further, when CoMP transmission is applied, the phase rotation amount may be defined as associated with information specific to a CoMP set (CoMP set identification information or the like).
Further, the base station apparatus may be able to control by associating a CSI-RS pattern with a phase rotation amount. For example, the base station apparatus may be able to control a phase rotation amount by associating a mapping position of a desired signal measurement RE (SMR) with a predetermined phase rotation amount for an interference measurement CSI-RS transmitted from each transmission point.
Furthermore, the base station apparatus may be able to control by associating an ID (UE ID) of a user terminal with a phase rotation amount. In this case, the base station apparatus may be able to control a phase rotation amount of an interference measurement CSI-RS symbol using the expression which associates the phase rotation amount with UE ID (for example, the following expression (10)).

[EXPRESSION 10]

$$\theta_i = \frac{(Y_i - 1)2\pi}{N}$$

$Y_i$: remainder of division of the UE ID of UE#i by N

i = 1, 2, 3, ..., N

N: any integer

When the expression (10) is applied, for example, it is assumed that N is 3 and UE IDs of UE#1, UE#2 and UE#3 are 1, 2 and 3, respectively. Then, for the user terminal of UE ID=1, the phase rotation amount ($\theta_1$) is controlled to be 0, for the user terminal of UE ID=2, the phase rotation angle ($\theta_2$) is controlled to be $2n/3$ and for the user terminal of UE ID=3, the phase rotation angle ($\theta_3$) is controlled to be $4n/3$. In this case, the user terminal is able to specify the phase rotation amount of an interference measurement CSI-RS symbol transmitted from each transmission point based on the UE ID. Further, when CoMP transmission is applied, the phase rotation amount may be defined as associated with information specific to a CoMP set (CoMP set identification information or the like).

Next description is made about phase rotation control for an interference measurement CSI-RS transmitted from each transmission point in a system configuration where there are a plurality of CoMP groups (CoMP clusters) each consisting of a plurality of transmission points. Note that the following description is given by way of example of two CoMP groups each having three transmission points. However, the number of transmission points and the number of CoMP groups are not limited to these numbers. Further, control of a phase rotation amount at each transmission point may be performed by application of the above-mentioned method.

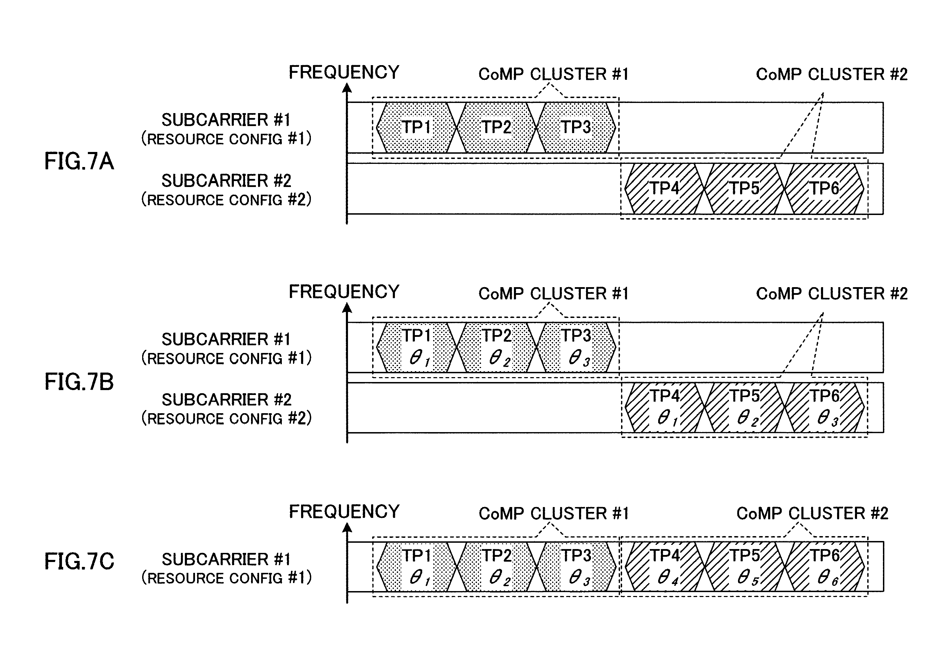

First, description is made, with reference to Fig. 7, about phase rotation control for an interference measurement CSI-RS transmitted from each transmission point when CoMP transmission is not applied (single cell transmission).

Fig. 7A illustrates the case where CoMP group #1 consisting of TP#1, TP#2 and TP#3 and CoMP group #2 consisting of TP#4, TP#5 and TP#6 are applied with mutually different frequency bands (subcarriers). When each transmission point allocates an interference measurement RE (IMR) to the same resource in a predetermined subframe, interference from other transmission points in the same CoMP group may be problematically estimated to be lower (underestimated).

This is because interference measurement CSI-RS symbols transmitted from plural transmission points in the CoMP group are indicated by QPSK (four states) and thereby, interference from the other transmission points may be canceled. On the other hand, as different CoMP groups use different subcarriers, the influence by interference is small even if the interference measurement CSI-RS symbols are of the same phase.

That is, when interference measurement CSI-RSs are arranged in the same resources among the plural transmission points that make up each CoMP group (among TP#1 to TP#3 or among TP#4 to TP#6), interference from other transmission points of the same CoMP group is not considered and there may be problem of reduction in the accuracy of measurement of interference power at each transmission point.

Fig. 7B illustrates the case where a phase difference of interference measurement CSI-RS symbols transmitted from respective transmission points of the same CoMP group is controlled, as illustrated in Fig. 4. In Fig. 7B, control is made such that mutually different phase rotation amounts ($\theta_1$, $\theta_2$, $\theta_3$) are added to predetermined interference measurement CSI-RS symbols of TP#1, TP#2 an TP#3 that make up CoMP group #1. For example, either symbols of respective pairs of interference measurement CSI-RS symbols adjacent in the time axis direction (for example, $X_{12}$, $X_{22}$, $X_{32}$) may be added with mutually different phase rotation amounts ($\theta_1$, $\theta_2$, $\theta_3$).

With this structure, even if the interference measurement CSI-RSs are arranged in the same resources at TP#1, TP#2 and TP#3 that make up CoMP group #1, it is possible to consider interference from other transmission points appropriately thereby to be able to estimate interference power at each transmission point ($P_1$ to $P_3$) appropriately.

Further, in Fig. 7B, as different subcarriers are used between different CoMP groups, the same phase can be applied to the different CoMP groups. Therefore, the predetermined interference measurement CSI-RS symbols transmitted from TP#4, TP#5 and TP#6 that make up CoMP group #2 may be controlled to be added with the mutually different phase rotation amounts ($\theta_1$, $\theta_2$, $\theta_3$), like in CoMP group #1.

Fig. 7C illustrates the case where the same frequency band (subcarrier) is applied to plural CoMP groups (CoMP groups #1, #2). In this case, the phase rotation amounts of interference measurement CSI-RS symbols between plural transmission points of each CoMP group are controlled respectively and preferably, different phase rotation amounts are added to interference measurement CSI-RS symbols of transmission points of different CoMP groups.

For example, mutually different phase rotation amounts (for example, $\theta_1$ to $\theta_6$) may be added to interference measurement CSI-RS symbols transmitted from respective transmission points (TP#1 to TP#6), using REs of the same position. With this structure, even when the interference measurement CSI-RSs transmitted from the plural transmission points are arranged at the same resources, it is possible to estimate interference power ($P_1$ to $P_6$) at the respective transmission points appropriately. Besides, as illustrated in Fig. 7C, as the same frequency band (subcarriers) is applied to the plural CoMP groups, it is possible to achieve effective use of radio resources.

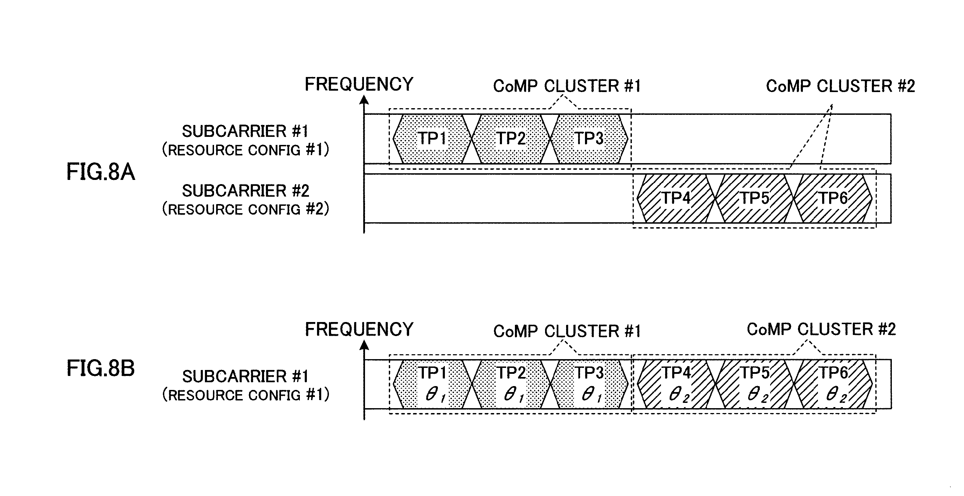

Next description is made, with reference to Fig. 8, about phase rotation control for each transmission point where CoMP transmission is applied.

Fig. 8A illustrates the case where CoMP group #1 consisting of TP#1, TP#2 and TP#3 and CoMP group #2 consisting of TP#4, TP#5 and TP#6 use mutually different bands (subcarriers). When CoMP transmission is applied, as illustrated in Fig. 3B mentioned above, the interference measurement CSI-RSs are arranged in the same resource at the plural transmission points (TP#1 to TP#3) that make up CoMP group #1 and thereby, it is possible to estimate interference power ($P_{123}$) other than CoMP group #1 (TP#1 to TP#3) appropriately. The same holds true with CoMP group #2.

Besides, as the different subcarriers are applied to CoMP group #1 and CoMP group #2, the influence by interference is small even if the interference measurement CSI-RS symbols are of the same phase.

On the other hand, in a system where the plural CoMP groups (CoMP groups #1 and #2) use same frequency band (subcarriers), when each transmission point of CoMP group #1 and CoMP group #2 arranges an interference measurement CSI-RS at the same RE, it is preferable that different phase rotation amounts are added to transmission points of different CoMP groups. For example, as illustrated in Fig. 8B, interference measurement CSI-RS symbols transmitted from the transmission points (TP#1 to TP#3) that make up CoMP group #1 are subjected to phase rotation control by $\theta_1$ and interference measurement CSI-RS symbols transmitted from the transmission points (TP#4 to TP#6) that make up CoMP group #2 are subjected to phase rotation control by $\theta_2$.

With this structure, even when the interference measurement CSI-RSs transmitted from the transmission points of CoMP groups are arranged in the same resource, it is possible to estimate interference power of each CoMP group ($P_{123}$, $P_{456}$) appropriately, in consideration of interference from transmission points of the other CoMP group. Further, the same frequency band (subcarrier) is applied to the plural CoMP groups, it is possible to achieve effective use of radio resources.

(SECOND EMBODIMENT)

In the second embodiment, explanation is made of a channel estimating method at a user terminal when an interference measurement CSI-RS is arranged in addition to a desired signal measurement CSI-RS.

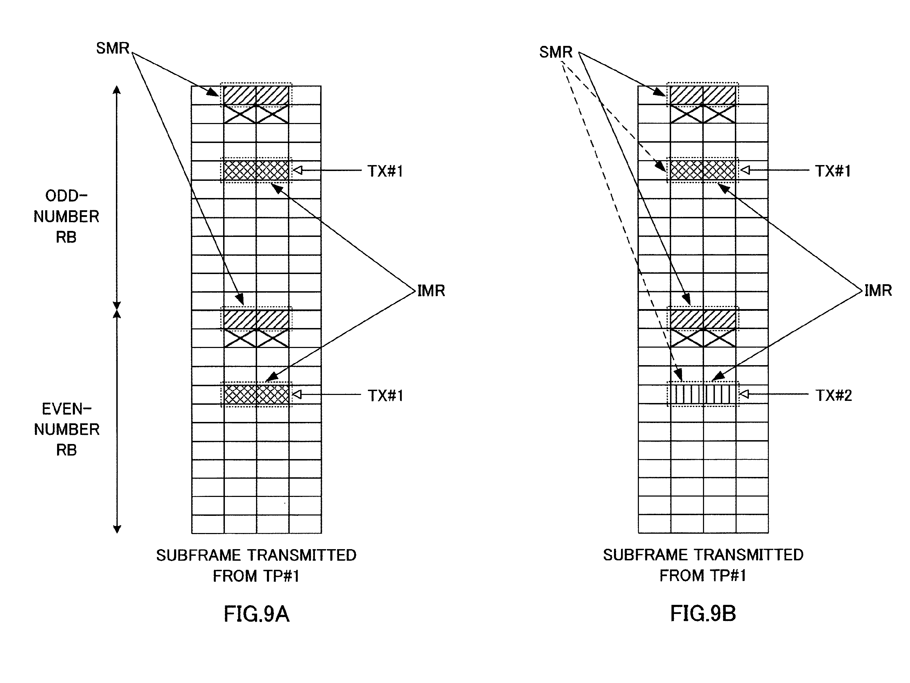

As illustrated in Fig. 9A, when a desired signal measurement RE (SMR) and an interference measurement RE (IMR) are arranged in a predetermined subframe, it may be configured that the interference measurement CSI-RS is transmitted from one antenna port (for example, first antenna port (Tx#1)) to the interference signal RE (IMR) and the second antenna port (Tx#2) is muted.

In this case, for estimation of a desired signal, there is a method for channel estimation only based on the desired signal measurement RE (SMR). For example, the channel estimation may be performed by Minimum Mean Squared Error (MMSE), only based on the desired signal measurement RE (SMR). For example, the channel estimation can be performed using the following expression (11).

[EXPRESSION 11]

$$G = R_{SMR} \left( R_{SMR} + \begin{bmatrix} \dfrac{1}{SINR_{SMR}} & & \\ & \ddots & \\ & & \dfrac{1}{SINR_{SMR}} \end{bmatrix} \right)^{-1}$$

$R_{SMR}$: autocorrelation matrix of desired signal measurement RE (SMR)
$SINR_{SMR}$: SINR of desired signal measurement RE (SMR)

Further, in the present embodiment, as illustrated in Fig. 9B, CSI-RSs are transmitted from the first antenna port (Tx#1) to interference measurement REs (IMRs) of odd-number resource blocks (RBs) and the second antenna port (Tx#2) is muted. Then, CSI-RSs are transmitted to the second antenna port (Tx#2) to interference measurement REs (IMRs) of even-number RBs and the first antenna port (Tx#1) is muted.

In this case, in estimation of a desired signal, it is possible to perform channel estimation by Minimum Mean Squared Error (MMSE) in consideration of the interference measurement REs (IMRs) as well as the desired signal measurement REs (SMRs) (based on the desired signal measurement REs (SMRs) and the interference measurement REs (IMRs)). For example, the channel estimation can be performed using the following expression (12).

[EXPRESSION 12]

$$G_{enhanced} = R_{SMR+IMR} \left( R_{SMR+IMR} + \begin{bmatrix} \frac{1}{SINR_{SMR}} & & & & \\ & \ddots & & & \\ & & \frac{1}{SINR_{SMR}} & & \\ & & & \frac{1}{SINR_{IMR}} & \\ & & & & \ddots & \\ & & & & & \frac{1}{SINR_{IMR}} \end{bmatrix} \right)^{-1}$$

$R_{SMR+IMR}$: autocorrelation matrix of desired signal measurement RE (SMR) and interference measurement RE (IMR)

$SINR_{SMR}$: SINR of desired signal measurement RE (SMR)

$SINR_{IMR}$: SINR of interference measurement RE (SMR)

Thus, the user terminal is able to perform CQI measurement and PMI selection based on channel estimation results using the desired signal measurement REs (SMRs) and interference measurement REs (IMRs). As the channel estimation is performed also considering the interference measurement REs, it is possible to improve the CQI measurement accuracy at the user terminal. Note that the user terminal may adopt the above-mentioned first embodiment and second embodiments in combination.

(RADIO COMMUNICATION SYSTEM)

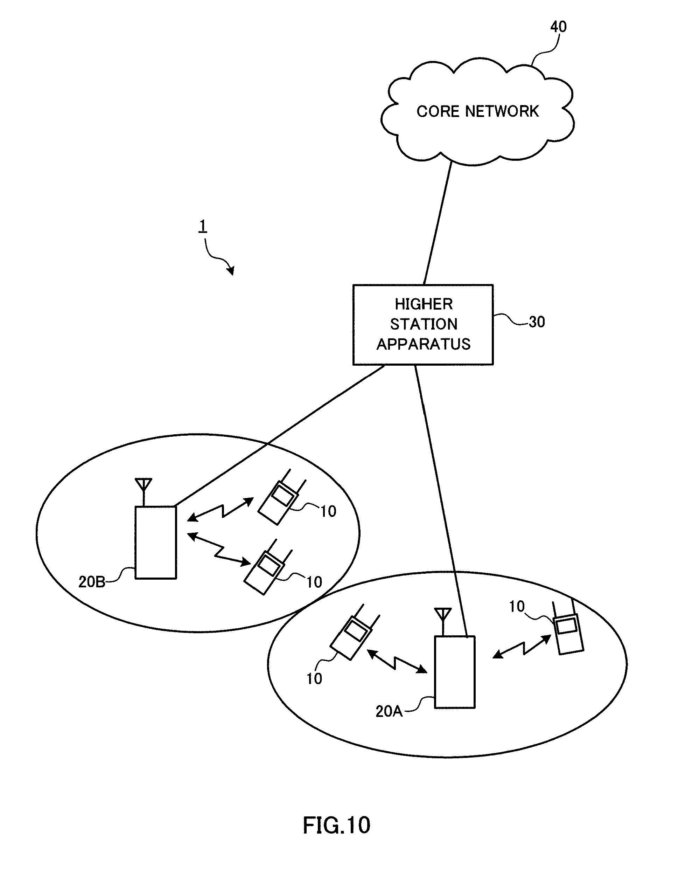

Here, description is made about a radio communication system according to the present embodiment. Fig. 10 is an explanatory view of the system configuration of the radio communication system according to the present embodiment. The radio communication system shown in Fig. 10 is, for example, an LTE system or a system covering SUPER 3G. This radio communication system adopts carrier aggregation where a plurality of base frequency blocks are used integrally, each of the base frequency blocks being a unit system band of the LTE system. This radio communication system may be also called IMT-Advanced or 4G.

As illustrated in Fig. 10, the radio communication system 1 comprises base station apparatuses 20A and 20B of respective transmission points and a user terminal 10 that communicates with the base station apparatuses 20A and 20B. The base station apparatuses 20A and 20B are connected to a higher station apparatus 30, which is connected to a core network 40. The base station apparatuses 20A and 20B are connected to each other by wired connection or wireless connection. The user terminal 10 is able to communicate with the base station apparatuses 20A and 20B that are transmission points. The higher station apparatus 30 includes, for example, but is not limited to, an access gateway device, a radio network controller (RNC) and a mobility management entity (MME).

The user terminal 10 includes an existing terminal (Rel.10 LTE) and a support terminal (for example, Rel.11 LTE), however, it is described as a user terminal below, except where specifically noted. Besides, for convenience of explanation, it is the user terminal 10 that performs radio communications with the base station apparatuses 20A and 20B.

In the radio communication system 1, radio access schemes applied are OFDMA (orthogonal frequency division multiple access) for downlink and SC-FDMA (single-carrier frequency division multiple access) for uplink. However, the uplink radio access scheme is not limited to this. OFDMA is a multi-carrier transmission scheme in which a frequency band is divided into a plurality of narrow frequency bands (subcarriers) and each of the subcarriers is mapped with data for communication. SC-FDMA is a single carrier transmission in which a system band is divided into bands each consisting of one or contiguous resource blocks and a plurality of terminals use mutually different bands thereby to reduce interference between the terminals.

Here, description is made about a communication channel. Downlink communication channels have a PDSCH (Physical Downlink Shared Channel) that is a downlink data channel used by the user terminal 10 in a shared manner and downlink L1/L2 control channels (PDCCH, PCFICH, PHICH). PDSCH is used to transmit transmission data and higher control information. PDCCH (Physical Downlink Control Channel) is used to transmit scheduling information of PDSCH and PUSCH. PCFICH (Physical Control Format Indicator Channel) is used to transmit the number of OFDM symbols used in PDCCH. PHICH (Physical Hybrid-ARQ Indicator Channel) is used to transmit ACK/NACK of HARQ for PUSCH.

Uplink communication channels include a PUSCH (Physical Uplink Shared Channel) that is an uplink data channel used by each user terminal in a shared manner and a PUCCH (Physical Uplink Control Channel) that is an uplink control channel. This PUSCH is used to transmit transmission data and higher control information. The PUCCH is used to transmit downlink channel state information (CSI (including CQI)), ACK/NACK and so on.

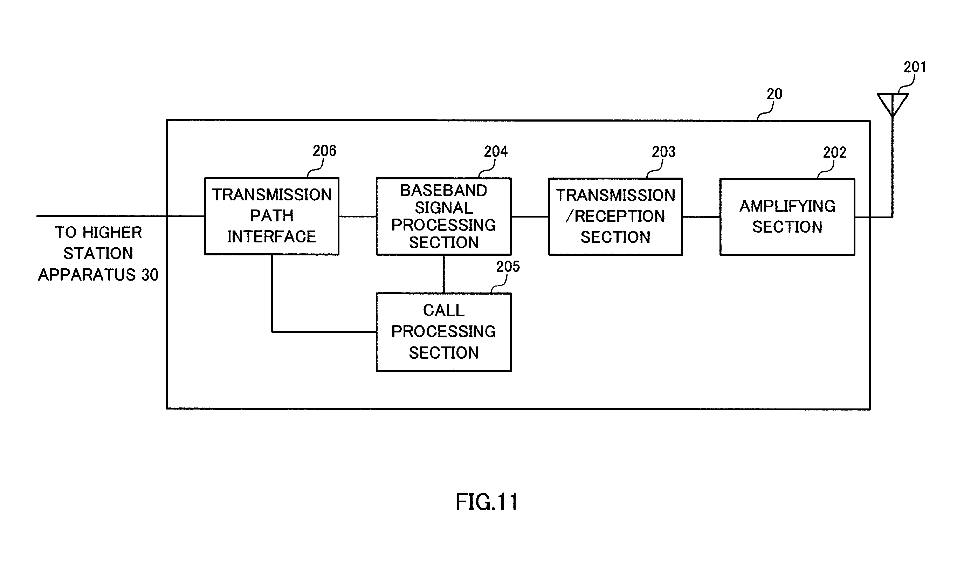

With reference to Fig. 11, an overall configuration of the base station apparatus according to the present embodiment will be described below. Note that the base station apparatuses 20A and 20B have the same configurations and therefore, they are explained as a base station apparatus 20. The base station apparatus 20 has a transmission/reception antenna 201, an amplifying section 202, a transmission/reception section (notifying section) 203, a baseband signal processing section 204, a call processing section 205 and a transmission path interface 206. Transmission data that is transmitted from the base station apparatus 20 to the user terminal in downlink is input from the higher station apparatus 30, via the transmission path interface 206, into the baseband signal processing section 204.

In the baseband signal processing section 204, a downlink data channel signal is subject to a PDCP layer process, division and coupling of transmission data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. Furthermore, as for the signal of the physical downlink control channel, which is a downlink control channel, transmission processes such as channel coding and inverse fast Fourier transform are performed.

Also, the baseband signal processing section 204 notifies each user terminal 10 connected to the same transmission point of control information for allowing the user terminal 10 to communicate with the base station apparatus 20 by a broadcast channel. Information for communication in the transmission point includes, for example, the uplink or downlink system bandwidth, identification information of a root sequence (root sequence index) for generating random access preamble signals in the PRACH (Physical Random Access Channel), and so on.

In the transmitting/receiving section 203, the baseband signal output from the baseband signal processing section 204 is subjected to frequency conversion into a radio frequency band. The amplifying section 202 amplifies the radio frequency signal subjected to frequency conversion, and outputs the result to the transmission/reception antenna 201.

Meanwhile, as for signals to be transmitted on the uplink from the user terminal 10 to the base station apparatus 20, a radio frequency signal that is received in the transmission/reception antenna 201 is amplified in the amplifying section 202, subjected to frequency conversion and converted into a baseband signal in the transmission/reception section 203, and is input into the baseband signal processing section 204.

The baseband signal processing section 204 performs an FFT process, an IDFT process, error correction decoding, a MAC retransmission control receiving process, and RLC layer and PDCP layer receiving processes, of the transmission data that is included in the baseband signal received on the uplink. The decoded signal is transferred to the higher station apparatus 30 through the transmission path interface 206.

The call processing section 205 performs call processing such as setting and release of a communication channel, status management of the base station apparatus 20 and management of radio resources.

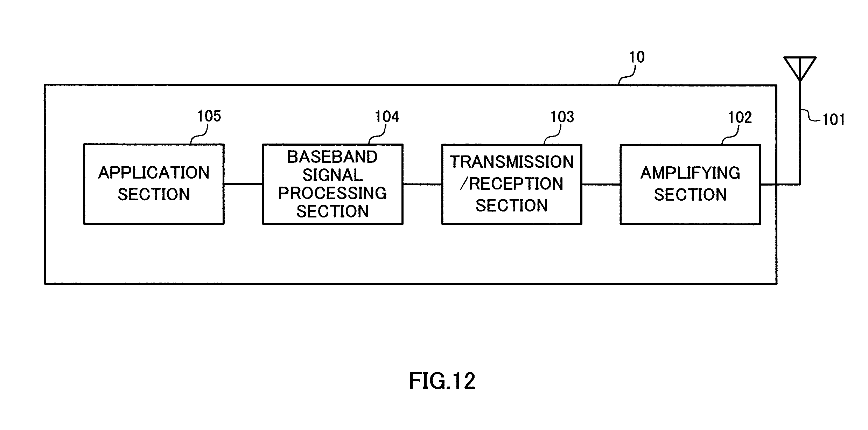

Next, referring to FIG. 12, an overall configuration of a user terminal according to the present embodiment will be described. The user terminal 10 has a transmission/reception antenna 101, an amplifying section 102, a transmission/reception section (receiving section) 103, a baseband signal processing section 104, and an application section 105.

As for downlink data, a radio frequency signal received in the transmission/reception antenna 101 is amplified in the amplifying section 102, and subjected to frequency conversion and converted into a baseband signal in the transmission/reception section 103. This baseband signal is subjected to reception processes such as an FFT process, error correction decoding and retransmission control, in the baseband signal processing section 104. In this downlink data, downlink transmission data is transferred to the application section 105. The application section 105 performs processes related to upper layers above the physical layer and the MAC layer. Also, in the downlink data, broadcast information is also transferred to the application section 105.

Meanwhile, uplink transmission data is input from the application section 105 to the baseband signal processing section 104. The baseband signal processing section 104 performs a mapping process, a retransmission control (HARQ) transmission process, channel coding, a DFT process, and an IFFT process. The baseband signal output from the baseband signal processing section 104 is converted into a radio frequency band in the transmission/reception section 103. After that, the radio frequency signal subjected to frequency conversion is amplified in the amplifying section 102 and is transmitted from the transmission/reception antenna 101.

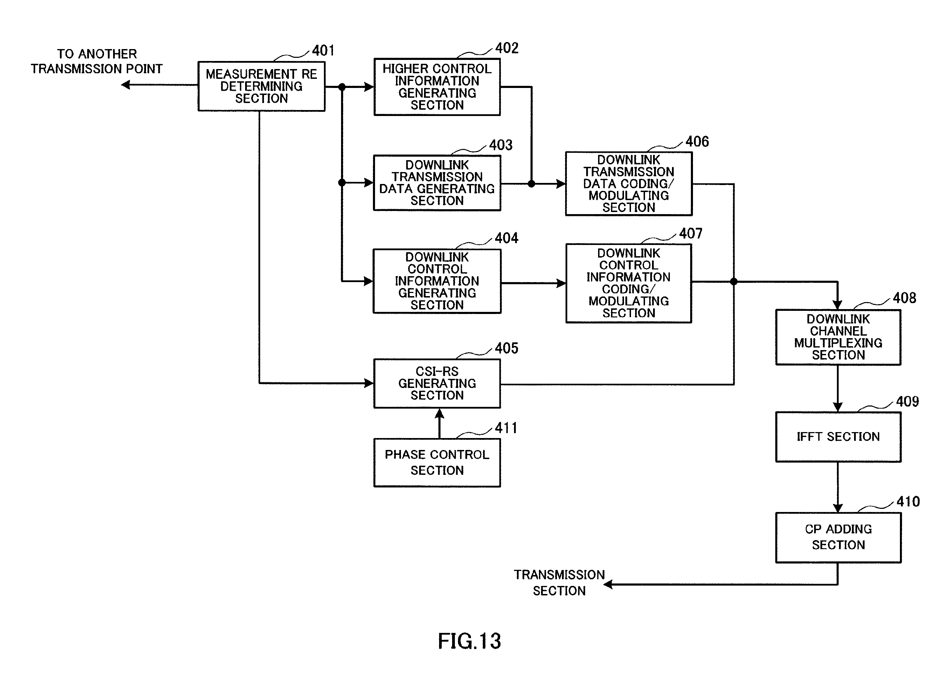

With reference to Fig. 13, description is made about functional blocks of the base station apparatus corresponding to the processing of determining a CSI-RS pattern. Note that each functional block in Fig. 13 mainly relates to the baseband signal processing section in Fig. 11. Besides, the functional block diagram of Fig 13 is simplified to explain the present invention, and assumed to have the configurations which the baseband signal processing section normally has.

The base station apparatus 20 has, at the transmission side, a measurement RE determining section 401, a higher control information generating section 402, a downlink transmission data generating section 403, a downlink control information generating section 404, a CSI-RS generating section 405, a downlink transmission data coding/modulating section 406, a downlink control information coding/modulating section 407 and a phase control section 411. The base station apparatus 20 also has a downlink channel multiplexing section 408, an IFFT section 409 and a CP adding section 410.

The measurement RE determining section 401 determines a resource (SMR) to allocate a reference signal for desired signal measurement (CSI-RS) and a resource (IMR) to allocate a reference signal for interference measurement. Besides, the measurement RE determining section 401 determines a combination of a resource to allocate a reference signal for desired signal measurement (measurement RE) and a resource for interference signal estimation (measurement RE).

For example, the measurement RE determining section 401 sets resources (IMRs) to allocate interference measurement CSI-RSs transmitted from respective transmission points, at the same position, as illustrated in Fig. 4B. It also sets the resources (SMRs) to allocate CSI-RSs for desired signal measurement transmitted from respective transmission points, so as not to overlap each other over the transmission points.

The information about allocation of desired signal measurement CSI-RSs and interference measurement CSI-RSs (CSI-RS pattern information) is transmitted to the higher control information generating section 402 for higher layer signaling (for example, RRC signaling) when it is quasi-statically signaled to the user terminal. Further, when it is signaled to the user terminal dynamically, this information about allocation is transmitted to the downlink control information generating section 404 to be included in the downlink control information. Furthermore, this information about allocation is transmitted to the CSI-RS generating section 405 to generate a CSI-RS and is also transmitted to the downlink transmission data generating section 403 to mute the downlink transmission data (zero-power).

The higher control information generating section 402 generates the higher control information that is transmitted/received by higher layer signaling (for example, RRC signaling) and outputs the generated higher control information to the downlink transmission data coding/modulating section 406. For example, the higher control information generating section 402 generates higher control information including information output from the measurement RE determining section 401 (information about CSI-RS transmission parameters). The higher control information generating section 402 also generates higher control information including information about a phase rotation amount of an interference measurement CSI-RS determined by the phase control section 411. In this case, it can generate bit information corresponding to a predetermined phase rotation amount, with reference the table shown in Fig. 6 described above.

The downlink transmission data generating section 403 generates the downlink transmission data and outputs the downlink transmission data to the downlink transmission data coding/modulating section 406. The downlink transmission data generating section 403 arranges a zero-power CSI-RS (muting) in accordance with the allocation information output from the measurement RE determining section 401.

The downlink control information generating section 404 generates downlink control information and outputs the downlink control information to the downlink control information coding/modulating section 407. The downlink transmission data coding/modulating section 406 performs channel coding and data modulation on the downlink transmission data and the higher control information and outputs the result to the downlink channel multiplexing section 408. The downlink control information coding/modulating section 407 performs channel coding and data modulation on the downlink control information and outputs the result to the downlink channel multiplexing section 408.

The phase control section 411 controls a phase control amount of an interference measurement CSI-RS and outputs it to the CSI-RS generating section 405. The phase control section is able to determine, as described above, a phase rotation amount (θ) based on information specific to the base station apparatus (for example, cell ID). Further, it is also able to determine the phase rotation amount (θ) based on an allocation pattern of a desired signal measurement CSI-RS. The phase control section 411 outputs the determined information about phase rotation amount to the CSI-RS generating section 405. Further, when notifying the user terminal of the determined phase rotation amount, the phase control section 411 outputs the information about phase rotation amount to the higher control information generating section 402.

The CSI-RS generating section 405 generates desired signal measurement CSI-RS and an interference measurement CSI-RS in accordance with the allocation information output from the measurement RE determining section 401, and outputs these CSI-RSs to the downlink channel multiplexing section 408. Further, the CSI-RS generating section 405 is able to perform phase rotation of the generated interference measurement CSI-RS based on the phase rotation amount output from the phase control section 411.

The downlink channel multiplexing section 408 combines the downlink control information, the CSI-RSs, the higher control information and the downlink transmission data to generate a transmission signal. The downlink channel multiplexing section 408 outputs the generated transmission signal to the IFFT section 409. The IFFT section 409 performs Inverse Fast Fourier Transform on the transmission signal and converts it from a frequency-domain signal to a time-domain signal. The transmission signal subjected to the IFFT is outputs to the CP adding section 410. The CP adding section 410 adds a CP (Cyclic Prefix) to the transmission signal subjected to the IFFT, and outputs the CP-added transmission signal to the amplifying section 202 shown in Fig. 11.

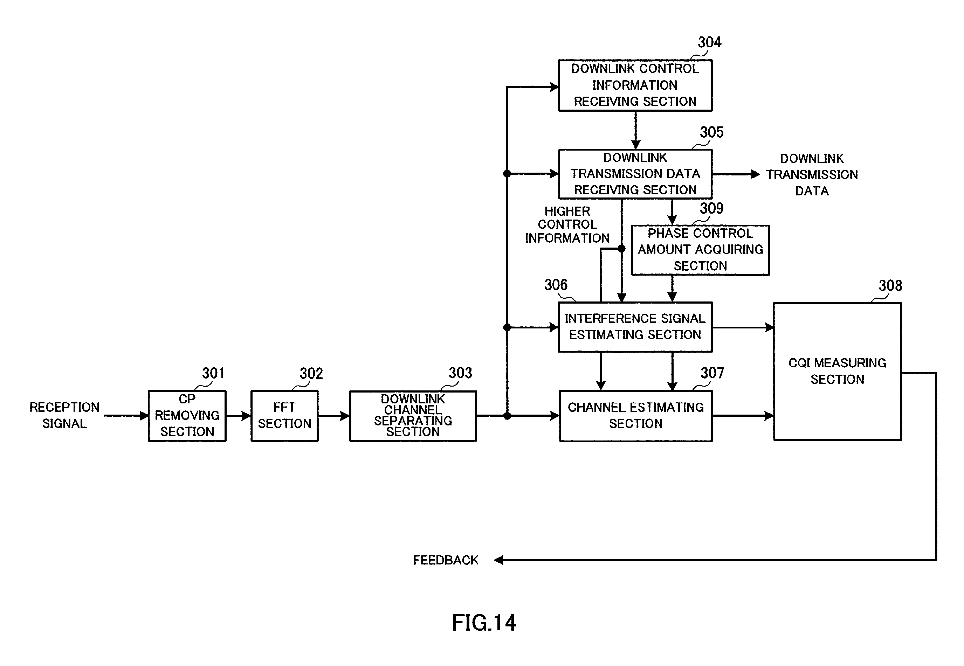

With reference to Fig. 14, functional blocks of the user terminal according to the present embodiment will be described. Note that each functional block of Fig. 14 mainly relates to the baseband signal processing section 104 shown in Fig. 12. The functional block diagram of Fig 14 is simplified to explain the present invention, and assumed to have the configurations which the baseband signal processing section normally has.

The user terminal 10 has, at the reception side, a CP removing section 301, an FFT section 302, a downlink channel separating section 303, a downlink control information receiving section 304, a downlink transmission data receiving section 305, an interference signal estimating section 306, a channel estimating section 307, a CQI measuring section 308 and a phase rotation amount acquiring section 309.

A transmission signal sent from the base station apparatus 20 is received by the transmission/reception antenna 101 shown in Fig. 12 and is output to the CP removing section 301. The CP removing section 301 removes a CP from the reception signal and outputs the signal to the FFT section 302. The FFT section 302 performs FFT (Fast Fourier Transform) on the CP-removed signal and converts it from a time-domain signal to a frequency-domain signal. The FFT section 302 outputs the signal having been converted to the frequency-domain signal, to the downlink channel separating section 303.

The downlink channel separating section 303 separates the downlink channel signal into downlink control information, downlink transmission data and CSI-RSs. The downlink channel separating section 303 outputs the downlink control information to the downlink control information receiving section 304, outputs the downlink transmission data and the higher control information to the downlink transmission data receiving section 305, outputs the interference measurement CSI-RS to the interference signal estimating section 306 and outputs the desired signal measurement CSI-RS to the channel estimating section 307.

The downlink control information receiving section 304 demodulates the downlink control information and outputs the demodulated downlink control information to the downlink transmission data receiving section 305. The downlink transmission data receiving section 305 demodulates the downlink transmission data using the demodulated downlink control information. At this time, the downlink transmission data receiving section 305 specifies the desired signal measurement RE (SMR) and the interference measurement RE (IMR) based on resource information included in the higher control information. The downlink transmission data receiving section 305 demodulates user data, excluding the desired signal measurement RE and the interference measurement RE. The downlink transmission data receiving section 305 outputs the higher control information included in the downlink transmission data to the phase rotation amount acquiring section 309, the interference signal estimating section 306 and the channel estimating section 307.

The phase rotation amount acquiring section 309 determines a phase rotation amount of the interference measurement CSI-RS given by the base station apparatus. As described above, when the phase rotation amounts is associated with the cell ID or CSI-RS pattern position, the phase rotation amount acquiring section 309 is able to determine the phase rotation amount based on such information. Besides, the phase rotation amount is defined by bit information, the phase rotation amount can be specified with reference to the table shown in Fig. 6 above.

The interference signal estimating section 306 estimates an interference signal in an interference measurement RE based on the information of transmission parameters or the like included in the higher control information (or downlink control information) and the phase rotation amount specified by the phase rotation amount acquiring section 309. The interference signal estimating section 306 performs estimation of the interference signal thereby to be able to average measurement results of all resource blocks. An average of the estimation results of the interference signals is sent to the CQI measuring section 308.

The channel estimating section 307 specifies a desired signal measurement RE (CSI-RS resources) based on the information of transmission parameters or the like included in higher control information (or downlink control information) thereby to estimate a desired signal in the desired signal measurement RE. Note that the channel estimating section 307 may be able to perform channel estimation using interference measurement REs (IMRs) in addition to desired signal measurement REs (SMRs), as shown in Fig. 9B described above.

The channel estimating section 307 notifies the CSI measuring section 308 of channel estimation values. The CSI measuring section 308 calculates a channel state (CQI) based on the interference measurement results sent from the interference signal estimating section 306, channel estimation results sent from the channel estimating section 307 and feedback mode. Note that the feedback mode may be any of Wideband CQI, Subband CQI and best-M average. The CQI calculated by the CQI measuring section 308 is sent to the base station apparatus 20 as the feedback information.

The present invention is not limited to the above-described embodiments and can be embodied in various modified or altered forms. For example, the setting position of a CSI-RS, the setting position of muting (zero-power), the number of processing sections, the processing procedure, the number of CSI-RSs, the number of muting resources and the number of transmission points in the above description may be modified appropriately. Further, in the above description, it is assumed that a plurality of transmission points are a plurality of base station apparatuses, however, the transmission points may be antennas. Other modifications may be also made appropriately, without departing the scope of the present invention.

The disclosure of Japanese Patent Application No. 2012-103511, filed on April 27, 2012, including the specification, drawings, and abstract, is incorporated herein by reference in its entirety.

**Claims**

1. A radio communication system comprising a plurality of base station apparatuses each configured to transmit desired signal measurement reference signals and interference measurement reference signals for measuring a channel state; and a user terminal configured to communicate with the base station apparatuses, each of the base station apparatuses comprising:

   a determining section configured to determine resources to allocate the desired signal measurement reference signals and the interference measurement reference signals; and
   a phase control section configured to perform phase rotation on symbols of the interference measurement reference signals,

   wherein the determining section controls the interference measurement reference signals to be allocated to same resources as interference measurement reference signals transmitted from another base station apparatus, and the phase control section controls the symbols of the interference measurement reference signals to have different phase rotation amounts from phase rotation amounts of the other base station apparatus.

2. The radio communication system according to claim 1, wherein the determining section allocates the interference measurement reference signals to two resources adjacent in a time axis direction and the phase control section performs phase rotation on a symbol of an interference measurement reference signal allocated to one of the two resources.

3. The radio communication system according to claim 1 or 2, wherein each of the base station apparatuses further comprises a notifying section configured to notify the user terminal of the phase rotation amounts of the symbols of the interference measurement reference signals.

4. The radio communication system according to claim 3, wherein the notifying section notifies the user terminal of the phase rotation amounts of the symbols of the interference measurement reference signals by higher layer signaling or a broadcast signal.

5. The radio communication system according to claim 4, wherein the notifying section notifies the user terminal of the phase rotation amounts with same timing as timing for transmitting transmission parameters to specify the desired signal measurement reference signals and the interference measurement reference signals by higher layer signaling.

6. The radio communication system according to claim 1, wherein the phase control section controls the phase rotation amounts of the symbols of the interference measurement reference signals based on a cell ID, a virtual cell ID, a user terminal ID or an allocation position of the desired signal measurement reference signals.

7. The radio communication system according to claim 1, wherein the user terminal comprising:

   a receiving section configured to receive the desired signal measurement reference signals and the interference measurement reference signals transmitted from each of the bases station apparatuses;
   a determining section configured to determine the phase rotation amounts of the symbols of the interference measurement reference signals;
   an estimating section configured to perform channel estimation and interference signal estimation; and

a measuring section configured to measure the channel state based on estimation results of the estimating section.

8. The radio communication system according to claim 7, wherein the estimating section performs channel estimation using the desired signal measurement reference signals and the interference measurement reference signals.

9. A base station apparatus that transmits desired signal measurement reference signals and interference measurement reference signals for measuring a channel state to a user terminal, the base station apparatus comprising:

a determining section configured to determine resources to allocate the desired signal measurement reference signals and the interference measurement reference signals; and
a phase control section configured to perform phase rotation on symbols of the interference measurement reference signals,
wherein the determining section controls the interference measurement reference signals to be allocated to same resources as interference measurement reference signals transmitted from another base station apparatus, and the phase control section performs phase rotation on the symbols of the interference measurement reference signals by different phase rotation amounts from phase rotation amounts of the other base station apparatus.

10. A user terminal comprising:

a receiving section configured to receive a desired signal measurement reference signal and an interference measurement reference signal for measuring a channel state;
an acquiring section configured to acquire a phase rotation amount of a symbol of the interference measurement reference signal;
an estimating section configured to perform channel estimation and interference signal estimation based on the desired signal measurement reference signal and/or the interference measurement reference signal; and
a measuring section configured to measure the channel state based on an estimation result of the estimating section.

11. A radio communication method for a plurality of base station apparatuses each configured to transmit desired signal measurement reference signals and interference measurement reference signals for measuring a channel state and a user terminal connected to any of the base station apparatuses; the radio communication method comprising the steps of:

in each of the base station apparatuses,
performing phase rotation on symbols of the interference measurement reference signals; and
allocating the desired signal measurement reference signals and the interference measurement reference signals to predetermined resources,
wherein the interference measurement reference signals transmitted from each of the base station apparatuses are allocated to same resources as interference measurement reference signals transmitted from another base station apparatus, and the symbols of the interference measurement reference signals have different phase rotation amounts from phase rotation amounts of the other base station apparatus.

FIG.1

FIG.2A

ESTIMATION OF
DESIRED SIGNAL OF
TP#1 IS ALLOWED

ESTIMATION OF
INTERFERENCE OF CELLS
OUTSIDE TP#1 AND TP#2 IS
ALLOWED

ESTIMATION OF
DESIRED SIGNAL OF
TP#2 IS ALLOWED

SUBFRAME TRANSMITTED
FROM TP#1

SUBFRAME TRANSMITTED
FROM TP#2

CRS
DMRS
PDCCH
PDSCH
INTERFERENCE MEASUREMENT RESOURCE
MUTING
CSI-RS

FIG.2B

FIG.3A

SUBFRAME TRANSMITTED
FROM TP#1
(COMP APPLIED)

SUBFRAME TRANSMITTED
FROM TP#2
(COMP APPLIED)

FIG.3B

SUBFRAME TRANSMITTED
FROM TP#1
(COMP NOT-APPLIED)

SUBFRAME TRANSMITTED
FROM TP#2
(COMP NOT-APPLIED)

FIG.3C

FIG.4A

SUBFRAME TRANSMITTED
FROM TP#1
(COMP NOT-APPLIED)

SUBFRAME TRANSMITTED
FROM TP#2
(COMP NOT-APPLIED)

FIG.4B

FIG.5A

FIG.5B

| PHASE INDICATOR | $\theta$ |
|---|---|
| 00 | 0 |
| 01 | $2\pi/3$ |
| 10 | $4\pi/3$ |

FIG.6

FIG.7A

FIG.7B

FIG.7C

FREQUENCY          CoMP CLUSTER #1                    CoMP CLUSTER #2

SUBCARRIER #1
(RESOURCE CONFIG #1)          TP1    TP2    TP3

FIG.8A

SUBCARRIER #2
(RESOURCE CONFIG #2)                              TP4    TP5    TP6

FREQUENCY          CoMP CLUSTER #1                    CoMP CLUSTER #2

FIG.8B      SUBCARRIER #1
(RESOURCE CONFIG #1)      TP1    TP2    TP3    TP4    TP5    TP6
                          $\theta_1$   $\theta_1$   $\theta_1$   $\theta_2$   $\theta_2$   $\theta_2$

EP 2 843 983 A1

SMR

ODD-
NUMBER
RB

EVEN-
NUMBER
RB

TX#1

IMR

TX#1

SUBFRAME TRANSMITTED
FROM TP#1

FIG.9A

SMR

TX#1

IMR

TX#2

SUBFRAME TRANSMITTED
FROM TP#1

FIG.9B

EP 2 843 983 A1

27

FIG.10

EP 2 843 983 A1

TO HIGHER
STATION
APPARATUS 30

206
TRANSMISSION
PATH
INTERFACE

204
BASEBAND
SIGNAL
PROCESSING
SECTION

203
TRANSMISSION
/RECEPTION
SECTION

202
AMPLIFYING
SECTION

201

20

205
CALL
PROCESSING
SECTION

FIG.11

EP 2 843 983 A1

**FIG.12**

FIG.13

EP 2 843 983 A1

FIG.14

## INTERNATIONAL SEARCH REPORT

| | International application No. |
|---|---|
| | PCT/JP2013/061069 |

**A. CLASSIFICATION OF SUBJECT MATTER**
*H04W16/28*(2009.01)i, *H04W72/04*(2009.01)i

According to International Patent Classification (IPC) or to both national classification and IPC

**B. FIELDS SEARCHED**

Minimum documentation searched (classification system followed by classification symbols)
H04W16/28, H04W72/04

Documentation searched other than minimum documentation to the extent that such documents are included in the fields searched
Jitsuyo Shinan Koho 1922-1996 Jitsuyo Shinan Toroku Koho 1996-2013
Kokai Jitsuyo Shinan Koho 1971-2013 Toroku Jitsuyo Shinan Koho 1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | NTT DOCOMO, Enhanced Interference Measurement Mechanism for Rel-11, 3GPP TSG RAN WG1 Meeting #68bis, R1-121471, 3GPP, 2012.03.20, pp.1-9 | 1-11 |
| A | WO 2012/046684 A1 (NTT Docomo Inc.), 12 April 2012 (12.04.2012), entire text; all drawings & JP 2012-80421 A & TW 201225600 A | 1-11 |
| A | WO 2009/087741 A1 (Panasonic Corp.), 16 July 2009 (16.07.2009), entire text; all drawings & US 2010/0284394 A1 & EP 2228934 A1 | 1-11 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 July, 2013 (03.07.13) | 16 July, 2013 (16.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2013/061069

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2011/119005 A2  (LG ELECTRONICS INC.), 29 September 2011 (29.09.2011), entire text; all drawings & US 2011/0235743 A1     & KR 10-2011-0108284 A & CN 102823168 A | 3-5 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012103511 A

**Non-patent literature cited in the description**

- Feasibility study for Evolved UTRA and UTRAN. *3GPP, TR25.912*, September 2006